# FASCICULE DE BREVET EUROPEEN

(11) **EP 2 583 416 B1**
(45) Date de publication et mention de la délivrance du brevet: **06.08.2014**
(21) Numéro de dépôt: 11727275.7
(22) Date de dépôt: 27.05.2011
(51) Int. Cl.: G06F 11/07, H04L 12/40

(54) **DISPOSITIF ET PROCÉDÉ DE CONTRÔLE DE TRAMES, DEVANT ÊTRE UTILISÉES PAR UN ORGANE ÉLECTRONIQUE D'UN RÉSEAU DE COMMUNICATION, EN FONCTION DES TYPES DES FONCTIONS UTILISANT DES PARAMÈTRES CONTENUS DANS CES TRAMES**
VORRICHTUNG UND VERFAHREN ZUR ÜBERPRÜFUNG VON FRAMES ZUR VERWENDUNG FÜR EINE ELEKTRONISCHE VORRICHTUNG EINES KOMMUNIKATIONSNETZES JE NACH FUNKTIONSTYPEN UND VERWENDUNG VON IN DIESEN FRAMES ENTHALTENEN PARAMETERN
DEVICE AND METHOD FOR CHECKING FRAMES TO BE USED BY AN ELECTRONIC DEVICE OF A COMMUNICATION NETWORK, ON THE BASIS OF FUNCTION TYPES AND USING PARAMETERS CONTAINED IN SAID FRAMES

(30) Priorité: 16.06.2010 FR 1054747
(43) Date de publication de la demande: 24.04.2013
(73) Titulaire: Peugeot Citroën Automobiles SA, 78140 Vélizy Villacoublay (FR)
(72) Inventeur: ANTONIUCCI, Lionel, F-92250 La Garenne Colombes (FR); WILWERT, Cédric, F-75013 Paris (FR)
(86) Numéro de dépôt international: PCT/FR2011/051210
(87) Numéro de publication internationale: WO 2011/157918

(56) Documents cités:
- EP-A1- 2 079 190
- US-A1- 2003 226 065
- US-A1- 2008 186 870

## Description

L'invention concerne les organes électroniques capables de communiquer entre eux via un réseau de communication, et plus précisément le contrôle des trames qui sont reçues par de tels organes électroniques.

Certains réseaux de communication comprennent un bus auquel sont connectés en parallèle des organes électroniques communicants. Les échanges de données entre organes électroniques communicants se font alors via le bus, au moyen de trames multiplexées. On entend ici par "trame" un ensemble de groupes de bits qui, pour certains au moins d'entre eux, sont représentatifs de valeurs prises par des paramètres qui sont utilisés par des fonctions locales au sein des organes électroniques.

Parmi ces réseaux, on peut notamment citer ceux de type CAN LS ("Controller Area Network Low Speed"), ou CAN HS ("Controller Area Network High Speed"), ou VAN ("Vehicle Area Network"), ou LIN ("Local Interconnect Network"), ou encore FlexRay. De tels réseaux sont utilisés dans de nombreux domaines, et notamment dans celui des véhicules (éventuellement de type automobile).

Comme le sait l'homme de l'art, l'environnement dans lequel évoluent les trames d'informations que s'échangent les organes électroniques des réseaux de communication précités peut se trouver perturbé par un élément extérieur (comme par exemple une perturbation électromagnétique) ou par une erreur interne liée aux couches physiques qui sont chargées de la transmission des données d'information (comme par exemple une dérive d'horloge ou un problème d'encapsulation). Ces perturbations, qui ont un caractère transitoire, provoquent des erreurs parmi les bits des trames. Ces erreurs constituent environ 90% de ce que l'on appelle généralement les défaillances de l'électronique, les 10% restant concernant des problèmes permanents (comme par exemple une coupure de faisceau, une déconnexion ou une mise à la masse).

Afin de permettre aux organes électroniques de détecter des erreurs dans les trames qu'ils reçoivent, on adjoint à ces dernières des informations sécurisées, comme par exemple un CRC (Contrôle de Redondance Cyclique), un checksum et/ou un compteur de processus. Lorsqu'un organe électronique reçoit une trame, il calcule les informations sécurisées précitées à partir des bits qu'elle contient, puis il compare ces informations sécurisées calculées à celles qui sont contenues dans la trame considérée. En cas d'identité, la trame est considérée comme valide, tandis qu'en cas de différence(s) la trame est considérée comme erronée (ou invalide).

Lorsqu'une trame reçue est erronée, une couche applicative de l'organe électronique, comme par exemple celle appelée en anglais "Fault Handling CAN", est chargée de fournir à cet organe électronique une trame de remplacement (ou de recouvrement), comportant des valeurs de paramètre(s) par défaut destinées à faire fonctionner une application locale qu'il comprend dans un mode dit dégradé. En d'autres termes, en cas de détection d'erreur(s) sur une trame, chaque application locale qui a besoin des informations contenues dans cette trame erronée est contrainte d'utiliser des valeurs par défaut plutôt que les valeurs réelles effectivement reçues.

Hélas, il peut arriver que dans certaines phases de vie certaines applications ne présentent plus un fonctionnement optimal lorsqu'elles sont contraintes d'utiliser des valeurs de paramètres par défaut contenues dans des trames de remplacement (ou recouvrement). Cela peut notamment résulter du fait que dans certains cas certaines valeurs de paramètres par défaut d'une trame de remplacement contraignent certaines applications à agir d'une façon qui n'est pas ou peu compatible avec d'autres actions permises par des valeurs par défaut d'autres paramètres de cette même trame de remplacement. Cela peut également résulter du fait que des valeurs de recouvrement ne reflètent pas l'état réel dans lequel se trouve la fonction "émettrice" et par conséquent la fonction "consommatrice" (ou "utilisatrice" ou encore "réceptrice") de la valeur par défaut non représentative adopte un comportement non adapté à la situation de vie réelle du véhicule.

Afin d'améliorer la situation il serait certes possible de calculer pour chaque trame erronée, de façon systématique et en temps réel, des valeurs par défaut compatibles entre elles pour chacun des paramètres qu'elle contient, mais cela entraînerait un ralentissement (très) important de la vitesse de fonctionnement des organes électroniques (à puissance de calcul constante), incompatible avec les temps de réaction qui sont exigés de certaines de leurs applications locales.

On connaît également du document US2008/186870, un dispositif conforme au préambule la revendication 1.

L'invention a donc pour but d'améliorer la situation sans que cela ne nécessite une augmentation notable de la puissance de calcul des organes électroniques.

Elle propose tout d'abord à cet effet un dispositif, destiné à contrôler des trames de groupes de bits reçues par un organe électronique propre à être connecté à un réseau de communication et utilisant au moins une fonction locale de type dit non sécuritaire, et comprenant des moyens de contrôle agencés, en cas de présence dans une trame reçue du réseau d'une erreur dans au moins un groupe de bits, pour contraindre l'organe électronique à utiliser tel quel au moins chaque groupe de bits de cette trame reçue qui est représentatif d'un paramètre d'une fonction locale de type non sécuritaire utilisée par l'organe électronique (y compris ceux qui sont erronés).

Le dispositif selon l'invention peut comporter d'autres caractéristiques qui peuvent être prises séparément ou en combinaison, et notamment :
- il peut comprendre des moyens d'analyse agencés pour déterminer le type de chaque fonction locale utilisant un groupe de bits erroné détecté, de manière à signaler ce type déterminé aux moyens de contrôle. En variante, ce sont les moyens de contrôle qui peuvent être agencés pour déterminer le type de chaque fonction locale utilisant un groupe de bits erroné détecté;
- en variante, ses moyens de contrôle peuvent être agencés, en cas de détection par l'organe électronique d'une trame reçue contenant au moins un groupe de bits représentatif d'un paramètre d'une fonction locale non sécuritaire puis de la décision prise par cet organe électronique de remplacer cette trame erronée détectée par une trame de remplacement comprenant des groupes de bits de remplacement ayant des valeurs choisies, pour contraindre l'organe électronique à utiliser tel quel au moins chaque groupe de bits de la trame erronée détectée, représentatif d'un paramètre d'au moins une fonction non sécuritaire, à la place du groupe de bits de remplacement contenu dans la trame de remplacement;
- ses moyens de contrôle peuvent être également agencés, en cas de présence dans une trame reçue du réseau d'une erreur dans au moins un groupe de bits représentatif d'un paramètre d'une fonction locale de type dit sécuritaire, pour contraindre l'organe électronique à utiliser un groupe de bits de remplacement ayant une valeur choisie à la place du groupe de bits sécuritaire erroné;
- chaque valeur choisie peut être une valeur par défaut prédéfinie.

L'invention propose également un organe électronique, destiné à être connecté à un réseau de communication et comprenant un dispositif de contrôle de trames du type de celui présenté ci-avant.

L'invention propose également un procédé, destiné à contrôler des trames de groupes de bits reçues par un organe électronique, propre à être connecté à un réseau de communication et utilisant au moins une fonction locale de type non sécuritaire, et consistant, en cas de détection dans une trame reçue du réseau d'une erreur dans au moins un groupe de bits, à contraindre l'organe électronique à utiliser tel quel au moins chaque groupe de bits de la trame reçue qui est représentatif d'un paramètre d'une fonction locale de type non sécuritaire utilisée par cet organe électronique (y compris ceux qui sont erronés).

Ce procédé peut également consister, en cas de détection dans une trame reçue du réseau d'une erreur dans au moins un groupe de bits représentatif d'un paramètre d'une fonction locale sécuritaire, à contraindre l'organe électronique à utiliser un groupe de bits de remplacement ayant une valeur choisie à la place du groupe de bits sécuritaire erroné.

L'invention est particulièrement bien adaptée, bien que non limitativement, aux réseaux de communication qui sont implantés dans des véhicules (éventuellement de type automobile).

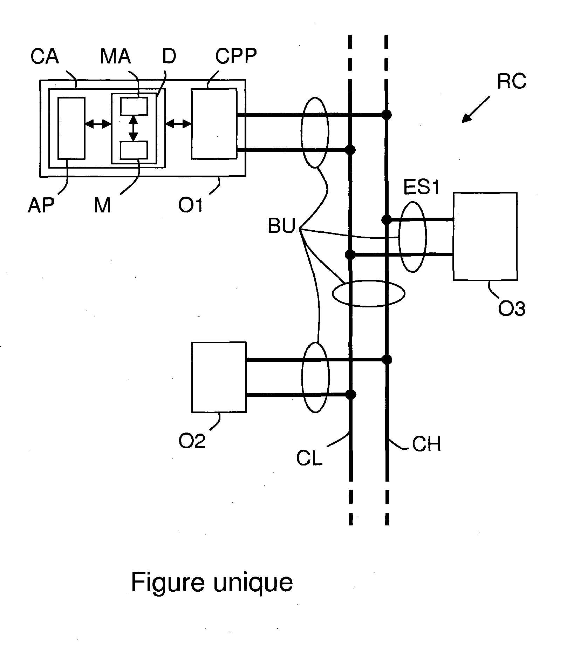

D'autres caractéristiques et avantages de l'invention apparaîtront à l'examen de la description détaillée ci-après, et du dessin annexé, sur lequel l'unique figure illustre schématiquement et fonctionnellement une partie d'un réseau de communication comprenant un bus auquel sont connectés en parallèle trois organes électroniques, dont l'un est équipé d'un exemple de réalisation d'un dispositif de contrôle de trames selon l'invention.

Le dessin annexé pourra non seulement servir à compléter l'invention, mais aussi contribuer à sa définition, le cas échéant.

L'invention a notamment pour but d'offrir un dispositif de contrôle de trames D destiné à être associé à un organe électronique communicant 01 connecté en dérivation à un bus BU d'un réseau de communication RC.

Dans ce qui suit, on considère, à titre d'exemple non limitatif, que le réseau de communication RC est un réseau de type CAN LS ("Controller Area Network Low Speed"). Mais, l'invention n'est pas limitée à ce type de réseau de communication. Elle concerne en effet tout type de réseau de communication équipé d'un bus, et notamment les réseaux de type CAN HS ("Controller Area Network High Speed"), VAN ("Vehicle Area Network"), LIN ("Local Interconnect Network") et FlexRay.

Par ailleurs, on considère dans ce qui suit, à titre d'exemple non limitatif, que le réseau RC fait partie d'un véhicule, éventuellement de type automobile (comme par exemple une voiture). Mais, l'invention n'est pas limitée à cette application. Elle concerne en effet, notamment, les véhicules terrestres, les bateaux et les avions, ainsi que les installations industrielles comportant au moins un réseau de communication RC.

On a schématiquement illustré sur l'unique figure une partie d'un réseau (de communication) RC comprenant un bus BU auquel sont connectés en dérivation plusieurs organes électroniques communicants Oj destinés à s'échanger des informations au moyen de trames multiplexées. Dans l'exemple non limitatif illustré, trois organes électroniques 01 à 03 (j = 1 à 3) sont connectés au bus BU, et plus précisément à ses premier CH et second CL fils électriques, respectivement dits « CAN_L » et « CAN_H » et dédiés au transport de trames de données numériques (ou bits). Mais, le nombre d'organes électroniques Oj d'un réseau RC n'est pas limité à trois. En fait, ce nombre doit être au moins égal à deux pour qu'il puisse y avoir échange de trames.

L'invention a pour but d'offrir un dispositif de contrôle de trames D destiné à être couplé à un organe électronique Oj. Dans l'exemple non limitatif illustré sur l'unique figure, seul le premier organe électronique 01 est couplé à un dispositif (de contrôle de trames) D. Mais, au sein d'un réseau RC plusieurs organes électroniques, voire tous, peuvent être couplés à un dispositif (de contrôle de trames) D. D'une manière générale, il est avantageux que chaque organe électronique, qui utilise au moins une fonction locale de type dit non sécuritaire, utilisée par une application non sécuritaire AP qu'il comprend, soit couplé à un dispositif D.

Il est important de noter que l'on entend ici par "organe électronique Oj couplé à un dispositif D" aussi bien le fait que l'organe électronique Oj soit équipé en interne d'un dispositif D (comme illustré non limitativement), que le fait que l'organe électronique Oj soit connecté à un dispositif D. Par conséquent, un dispositif D selon l'invention peut être réalisé sous la forme de circuits électroniques, de modules logiciels (ou informatiques), ou d'une combinaison de circuits électroniques et de modules logiciels.

Lorsqu'un organe électronique est équipé en interne d'un dispositif D, ce dernier (D) peut par exemple (et comme illustré) être implanté dans la couche applicative CA, laquelle comprend chaque application AP tournant dans cet organe électronique et est connectée à l'ensemble regroupant les couches physiques et protocolaires CPP.

Il est également important de noter que l'on entend ici par "fonction de type non sécuritaire" une fonction qui est utilisée par une application AP qui n'est pas susceptible de nuire à la sécurité d'une personne ou d'un équipement lorsqu'elle fonctionne. Dans le cas d'un véhicule, il pourra par exemple s'agir d'une fonction d'une application dédiée à l'anti-démarrage codé, ou bien à la climatisation, ou encore à la dépollution (sur la ligne d'échappement). Par ailleurs, on entend ici par "fonction de type sécuritaire" une fonction qui est utilisée par une application qui est susceptible de nuire à la sécurité d'une personne ou d'un équipement lorsqu'elle fonctionne. Dans le cas d'un véhicule, il pourra par exemple s'agir d'une fonction d'une application dédiée à la régulation de vitesse, ou au freinage (par exemple le freinage d'urgence ou l'ABS), ou au contrôle de trajectoire (par exemple l'ESP), ou au contrôle des blocs optiques, ou à la direction assistée, ou à la "thermique sous capot" (risque de destruction moteur en cas de non fonctionnement), ou à la limitation de vitesse, ou encore à l'assistance aux démarrages en côte.

Comme illustré schématiquement et fonctionnellement sur l'unique figure, un dispositif D, selon l'invention, comprend au moins des moyens de contrôle MC chargés d'intervenir chaque fois qu'une trame a été reçue du réseau RC par l'organe électronique 01 auquel ils sont associés.

Plus précisément, chaque fois que l'organe électronique 01 a reçu du réseau RC une trame comprenant une erreur dans au moins un groupe de bits, les moyens de contrôle MC sont agencés de manière à contraindre cet organe électronique 01 à utiliser tel quel au moins chaque groupe de bits qui est contenu dans la trame reçue et qui est représentatif d'un paramètre d'une fonction locale de type non sécuritaire utilisée par une application AP de l'organe électronique 01.

En d'autres termes, lorsqu'une trame est erronée les moyens de contrôle MC ordonnent à leur organe électronique 01, et plus précisément à chaque application AP de ce dernier (O1), d'utiliser toutes les valeurs des paramètres non sécuritaires qui sont contenues dans cette trame erronée, même si certaines d'entre elles sont erronées.

Chaque groupe de bits erroné est généralement détecté par l'une au moins des couches protocolaires de l'ensemble CPP (par exemple celle qui est chargée du calcul du CRC, ou celle qui est chargée du calcul du checksum), puis signalé par cette couche protocolaire au dispositif D. On notera que la fonction de gestion de fautes (ou d'erreurs) ("ou fault handling CAN") peut également détecter des erreurs liées à des problèmes de fonctionnement dans la couche applicative de fonctions émettrices de paramètres (dans ce cas la consistance de la trame circulant sur le réseau multiplexé est correcte, et donc il n'y a pas de détection d'anomalie par les couches protocolaires, mais les champs de bits peuvent se trouver hors plage fonctionnelle, par exemple).

Par exemple, et comme illustré non limitativement, le dispositif D peut comprendre des moyens d'analyse MA qui sont chargés de déterminer le type de chaque fonction locale qui utilise un groupe de bits erroné qui a été détecté et signalé par une couche protocolaire. Il est rappelé que le type d'une fonction locale est soit sécuritaire, soit non sécuritaire. Les moyens d'analyse MA sont ensuite chargés de signaler aux moyens de contrôle MC chaque groupe de bits erroné et le type déterminé de la fonction locale qui doit utiliser la valeur de paramètre que représente ce groupe de bits.

On notera que dans une variante, ce sont les moyens de contrôle MC qui peuvent être agencés pour déterminer eux-mêmes le type de chaque fonction locale qui utilise un groupe de bits erroné qui a été détecté et signalé par une couche protocolaire.

Dans les exemples de réalisation décrits ci-avant, c'est le dispositif D qui est chargé de contrôler les trames erronées afin de prendre les décisions qui s'imposent quant à l'utilisation ou non des groupes de bits qu'elles contiennent.

Mais, dans une variante, c'est l'organe électronique 01, et plus précisément l'une de ses couches applicatives (comme par exemple une couche de gestion de fautes (ou d'erreurs) ("ou fault handling CAN"), qui peut être en charge, par construction, de prendre des décisions en cas de détection d'une trame erronée. Par exemple, cette couche applicative peut être agencée de manière à décider de remplacer une trame erronée détectée par une trame de remplacement (ou de recouvrement) comprenant des groupes de bits de remplacement ayant des valeurs choisies (par défaut ou par calcul).

Dans ce cas, les moyens de contrôle MC surveillent les trames de remplacement générées par la couche applicative précitée de manière à contraindre l'organe électronique 01 à utiliser tel quel au moins chaque groupe de bits d'une trame erronée détectée, représentatif d'un paramètre d'au moins une fonction non sécuritaire, y compris ceux qui sont erronés, à la place de chaque groupe de bits de remplacement correspondant contenu dans une trame de remplacement fournie par ladite couche applicative. En d'autres termes, les moyens de contrôle MC sont placés à un niveau hiérarchique décisionnel supérieur à celui de la couche applicative. On notera que les moyens de contrôle MC peuvent soit autoriser l'utilisation des groupes de bits d'une trame de remplacement, qui sont représentatifs d'un paramètre d'une fonction sécuritaire et qui ont été remplacés par des groupes de bits de remplacement, avec les groupes de bits reçus dont ils ont refusé le remplacement, soit interdire l'utilisation des groupes de bits d'une trame de remplacement, qui sont représentatifs d'un paramètre d'une fonction sécuritaire et qui ont été remplacés par des groupes de bits de remplacement (dans ce cas, l'application concernée ne dispose pas des valeurs des paramètres des fonctions sécuritaires).

On notera que dans une variante, ou bien en complément, les moyens de contrôle MC peuvent être agencés, lorsqu'une trame reçue du réseau RC comprend une erreur dans au moins un groupe de bits représentatif d'un paramètre d'une fonction locale sécuritaire, pour contraindre leur organe électronique 01 à utiliser un groupe de bits de remplacement ayant une valeur choisie à la place du groupe de bits sécuritaire erroné.

Dans ce cas, chaque valeur choisie pour un groupe de bits peut être une valeur par défaut prédéfinie (par exemple stockée dans une table de correspondance valeur de paramètre/fonction).

On notera également que la fonction réceptrice non sécuritaire n'utilise pas la dernière valeur valide reçue, mais l'information réelle qui circule sur le réseau multiplexé. Si cette information réelle évolue alors que la trame est erronée, la fonction réceptrice non sécuritaire prend en compte cette évolution.

On va maintenant décrire un exemple de mise en oeuvre de l'invention dans le cas où le premier organe électronique 01 est un calculateur contrôlant le moteur d'un véhicule de type hybride ou à moteur thermique à contrôle d'arrêt ("stop and start") et comportant une application AP d'anti-démarrage codé (ou ADC), le deuxième organe électronique 02 est un calculateur appelé BSI (boîtier de servitude intelligent), et le troisième organe électronique 03 est un calculateur appelé HPCU. Ce dernier (HPCU) est l'organe qui supervise le réseau électrique d'un véhicule de type hybride. Il contrôle les moteurs électriques et synthétise également les demandes et informations provenant des différents calculateurs connectés au réseau (par exemple c'est lui qui détermine le couple moteur demandé par le conducteur en prenant en compte les différents traitements réalisés, notamment, par le CMM, le calculateur de la boîte de vitesse et le régulateur de vitesse).

Il est rappelé que l'application ADC permet d'interdire le démarrage du véhicule via le blocage de l'injection lorsque la communication (échange de trames) entre le premier organe électronique 01 (CMM) et le deuxième organe électronique 02 (BSI) n'est plus assurée de manière optimale (ce qui est caractéristique d'une effraction (par exemple lors d'un changement non autorisé de CMM)). Lorsque le blocage de l'injection est décidé, on dit que le premier organe électronique 01 (CMM) est verrouillé. Inversement, lorsque le blocage de l'injection n'est pas décidé, on dit que le premier organe électronique 01 (CMM) est déverrouillé.

Afin de déterminer si il doit se verrouiller, le premier organe électronique 01 (CMM) envoie périodiquement sur le réseau RC une requête de déverrouillage à destination du deuxième organe électronique 02 (BSI) et contrôle la réponse que ce dernier est censé lui transmettre en retour. Si cette réponse est conforme à ce qu'il attend, alors le premier organe électronique 01 (CMM) demeure déverrouillé. Dans le cas contraire, il se verrouille et empêche ainsi le démarrage du véhicule.

Cet échange de trames entre le premier organe électronique 01 (CMM) et le deuxième organe électronique 02 (BSI) imposé par l'application ADC ne doit avoir lieu que dans une unique situation de vie : lorsque le moteur thermique se trouve dans l'état coupé ou calé. Il ne doit pas s'effectuer lorsque le moteur se trouve dans l'état arrêté (temporaire) décidé par l'application stop and start, afin de ne pas risquer de bloquer le redémarrage du véhicule lorsque le conducteur le souhaite.

Afin de déterminer l'état dans lequel est placé le moteur thermique (et ainsi initier ou non la communication ADC avec le deuxième organe électronique 02 (BSI)) l'application ADC a besoin de deux informations : la valeur en cours du régime moteur (trs/min) et l'état en cours d'un paramètre appelé "demande de stop moteur" qui est contrôlé et émis sur le réseau RC par le troisième organe électronique 03 (HPCU). L'état du paramètre "demande de stop moteur" est actif lorsque le troisième organe électronique 03 (HPCU) requiert l'arrêt du moteur thermique et inactif dans le cas contraire.

On comprendra que lorsque le régime moteur est nul et qu'un arrêt temporaire du moteur thermique a été demandé et émis sur le réseau RC par le troisième organe électronique 03 (HPCU), le premier organe électronique 01 (CMM) considère que le moteur thermique se trouve dans l'état arrêté. La communication entre l'application ADC et le deuxième organe électronique 02 (BSI) n'est donc pas initiée et il n'y a aucun risque de verrouillage du premier organe électronique 01 (CMM). En revanche, lorsque le régime moteur est nul et qu'aucun arrêt temporaire du moteur thermique n'a été demandé et émis sur le réseau RC par le troisième organe électronique 03 (HPCU), le premier organe électronique 01 (CMM) considère que le moteur thermique se trouve dans l'état coupé/calé. La communication entre l'application ADC et le deuxième organe électronique 02 (BSI) est donc initiée et il est possible de verrouiller le premier organe électronique 01 (CMM) en cas de non-conformité ou d'absence de réponse du deuxième organe électronique 02 (BSI).

Si la trame qui est émise par le troisième organe électronique 03 (HPCU), pour requérir un arrêt temporaire du moteur thermique, est corrompue sur le bus BU suite à une perturbation physique ou protocolaire, la trame parvient erronée dans le premier organe électronique 01 (CMM). Par exemple, elle peut comporter une valeur interdite de régime moteur (par exemple réception d'une valeur égale à 8100 trs/min alors que la plage de valeurs autorisée est comprise entre 0 et 8000 trs/min). Dans cette situation, et en l'absence de mise en oeuvre de l'invention, le premier organe électronique 01 (CMM) détruit la trame erronée et la remplace par une trame de remplacement contenant des valeurs par défaut pour tous les paramètres qu'elle contient. L'application ADC va alors utiliser le contenu de la trame de remplacement. Or celle-ci contenant une valeur par défaut signalant que le paramètre "demande de stop moteur" est dans l'état inactif, elle initie la communication avec le deuxième organe électronique 02 (BSI), ce qui va aboutir à un verrouillage non souhaité du premier organe électronique 01 (CMM).

Cette situation ne peut pas se produire lorsque l'invention est mise en oeuvre, du fait que le dispositif D contraint le premier organe électronique 01 (CMM) à utiliser la valeur erronée (ou corrompue), et donc réelle, du régime moteur (paramètre non sécuritaire) qui est contenue dans la trame erronée reçue, et non pas une valeur de remplacement par défaut, permettant ainsi de ne pas verrouiller inutilement le premier organe électronique 01 (CMM).

On notera que la mise en oeuvre de l'invention dans le cas de l'application ADC n'est qu'un exemple parmi de nombreux autres.

Il est également important de noter que l'invention peut être également considérée sous l'angle d'un procédé de contrôle de trames, pouvant être notamment mis en oeuvre au moyen d'un dispositif de contrôle de trames D du type de celui présenté ci-avant. Les fonctionnalités offertes par la mise en oeuvre du procédé selon l'invention étant identiques à celles offertes par le dispositif D présenté ci-avant, seule la combinaison de fonctionnalités principales offerte par le procédé est présentée ci-après.

Ce procédé consiste, en cas de détection dans une trame, reçue du réseau RC par un organe électronique 01, d'une erreur dans au moins un groupe de bits, à contraindre cet organe électronique 01 à utiliser tel quel au moins chaque groupe de bits de la trame reçue qui est représentatif d'un paramètre d'une fonction locale de type non sécuritaire utilisée par cet organe électronique 01.

L'invention ne se limite pas aux modes de réalisation de dispositif de contrôle de trames, d'organe électronique et de procédé de contrôle de trames décrits ci-avant, seulement à titre d'exemple, mais elle englobe toutes les variantes que pourra envisager l'homme de l'art dans le cadre des revendications ci-après.

## Revendications

1. Dispositif de contrôle de trames de groupes de bits reçues (D) pour un organe électronique (O1) destiné à être connecté à un réseau de communication (RC) et utilisant au moins une fonction locale de type dit non sécuritaire, **caractérisé en ce qu'**il comprend des moyens de contrôle (MC) agencés, en cas de présence dans une trame reçue dudit réseau (RC) d'une erreur dans au moins un groupe de bits, pour contraindre ledit organe électronique (O1) à utiliser tel quel au moins chaque groupe de bits de ladite trame reçue qui est représentatif d'un paramètre d'une fonction locale de type non sécuritaire utilisée par ledit organe électronique (O1).

2. Dispositif selon la revendication 1, **caractérisé en ce qu'**il comprend des moyens d'analyse (MA) agencés pour déterminer le type de chaque fonction locale utilisant un groupe de bits erroné détecté, de manière à signaler ce type déterminé auxdits moyens de contrôle (MC).

3. Dispositif selon la revendication 1, **caractérisé en ce que** lesdits moyens de contrôle (MC) sont agencés pour déterminer le type de chaque fonction locale utilisant un groupe de bits erroné détecté.

4. Dispositif selon la revendication 1, **caractérisé en ce que** lesdits moyens de contrôle (MC) sont agencés, en cas de détection par ledit organe électronique (O1) d'une trame reçue contenant au moins un groupe de bits représentatif d'un paramètre d'une fonction locale non sécuritaire puis d'une décision de remplacer cette trame erronée détectée par une trame de remplacement comprenant des groupes de bits de remplacement ayant des valeurs choisies, pour contraindre ledit organe électronique (O1) à utiliser tel quel au moins chaque groupe de bits de ladite trame erronée détectée, représentatif d'un paramètre d'au moins une fonction non sécuritaire, à la place du groupe de bits de remplacement correspondant contenu dans ladite trame de remplacement.

5. Dispositif selon l'une des revendications 1 à 4, **caractérisé en ce que** lesdits moyens de contrôle (MC) sont agencés, en outre, en cas de présence dans une trame reçue dudit réseau (RC) d'une erreur dans au moins un groupe de bits représentatif d'un paramètre d'une fonction locale de type dit sécuritaire, pour contraindre ledit organe électronique (O1) à utiliser un groupe de bits de remplacement ayant une valeur choisie à la place dudit groupe de bits sécuritaire erroné.

6. Dispositif selon la revendication 5, **caractérisé en ce que** ladite valeur choisie est une valeur par défaut prédéfinie.

7. Organe électronique (O1), destiné à être connecté à un réseau de communication (RC), **caractérisé en ce qu'**il comprend un dispositif de contrôle de trames (D) selon l'une des revendications précédentes.

8. Procédé de contrôle de trames de groupes de bits reçues (D) pour un organe électronique (O1) destiné à être connecté à un réseau de communication (RC) et utilisant au moins une fonction locale de type dit non sécuritaire, **caractérisé en ce qu'**il consiste, en cas de détection dans une trame reçue dudit réseau (RC) d'une erreur dans au moins un groupe de bits, à contraindre ledit organe électronique (O1) à utiliser tel quel au moins chaque groupe de bits de ladite trame reçue qui est représentatif d'un paramètre d'une fonction locale de type non sécuritaire utilisée par ledit organe électronique (O1).

9. Procédé selon la revendication 8, **caractérisé en ce qu'**il consiste en outre, en cas de détection dans une trame reçue dudit réseau (RC) d'une erreur dans au moins un groupe de bits représentatif d'un paramètre d'une fonction locale de type dit sécuritaire, à contraindre ledit organe électronique (O1) à utiliser une trame de remplacement comprenant des groupes de bits ayant des valeurs choisies à la place dudit groupe de bits sécuritaire erroné.

## Patentansprüche

1. Prüfvorrichtung für empfangene Bitgruppen-Frames (D) für ein elektronisches Organ (O1), das dazu bestimmt ist, mit einem Kommunikationsnetzwerk (RC) verbunden zu werden, und das wenigstens eine lokale Funktion vom Typ nicht sicherheitsgerichtet verwendet, **dadurch gekennzeichnet, dass** sie Prüfmittel (MC) umfasst, die angeordnet sind, um, bei Vorhandensein eines Fehlers in wenigstens einer Bitgruppe in einem vom Netzwerk (RC) empfangenen Frame, das elektronische Organ (O1) zu zwingen, wenigstens jede Bitgruppe des empfangenen Frames unverändert zu verwenden, die bezeichnend ist für einen Parameter einer lokalen Funktion vom Typ nicht sicherheitsgerichtet, die vom elektronischen Organ (O1) verwendet wird.

2. Vorrichtung nach Anspruch 1, **dadurch gekennzeichnet, dass** sie Analysemittel (MA) umfasst, die angeordnet sind, um den Typ jeder lokalen Funktion, die eine festgestellte, fehlerhafte Bitgruppe verwendet, zu ermitteln, um diesen ermittelten Typ den Prüfmitteln (MC) zu melden.

3. Vorrichtung nach Anspruch 1, **dadurch gekennzeichnet, dass** die Prüfmittel (MC) angeordnet sind, um den Typ jeder lokalen Funktion, die eine festgestellte, fehlerhafte Bitgruppe verwendet, zu ermitteln.

4. Vorrichtung nach Anspruch 1, **dadurch gekennzeichnet, dass** die Prüfmittel (MC) angeordnet sind, um bei Feststellung durch das elektronische Organ (O1) eines empfangenen Frames mit wenigstens einer Bitgruppe, die bezeichnend ist für einen Parameter einer lokalen, nicht sicherheitsgerichteten Funktion und für eine Entscheidung, dieses festgestellte, fehlerhafte Frame durch ein Ersatzframe zu ersetzen, das Ersatzbitgruppen mit ausgewählten Werten umfasst, das elektronische Organ (O1) zu zwingen, wenigstens jede Bitgruppe des festgestellten, fehlerhaften Frames unverändert zu verwenden, die bezeichnend ist für einen Parameter von wenigstens einer lokalen, nicht sicherheitsgerichteten Funktion, anstelle der entsprechenden Ersatzbitgruppe, die im Ersatzframe enthalten ist.

5. Vorrichtung nach einem der Ansprüche 1 bis 4, **dadurch gekennzeichnet, dass** die Prüfmittel (MC) ferner angeordnet sind, um, bei Vorhandensein eines Fehlers in wenigstens einer Bitgruppe in einem vom Netzwerk (RC) empfangenen Frame, die bezeichnend ist für einen Parameter einer lokalen Funktion vom Typ sicherheitsgerichtet, das elektronische Organ (O1) zu zwingen, eine Ersatzbitgruppe mit einem ausgewählten Wert zu verwenden, anstelle der fehlerhaften, sicherheitsgerichteten Bitgruppe.

6. Vorrichtung nach Anspruch 5, **dadurch gekennzeichnet, dass** der ausgewählte Wert ein vorausdefinierter Standardwert ist.

7. Elektronisches Organ (O1), das dazu bestimmt ist, mit einem Kommunikationsnetzwerk (RC) verbunden zu werden, **dadurch gekennzeichnet, dass** es eine Prüfvorrichtung für Frames (D) nach einem der vorhergehenden Ansprüche umfasst.

8. Verfahren zum Prüfen von empfangenen Bitgruppen-Frames (D) für ein elektronisches Organ (O1), das dazu bestimmt ist, mit einem Kommunikationsnetzwerk (RC) verbunden zu werden, und das wenigstens eine lokale Funktion vom Typ nicht sicherheitsgerichtet verwendet, **dadurch gekennzeichnet, dass** es darin besteht, bei Feststellung eines Fehlers in wenigstens einer Bitgruppe in einem vom Netzwerk (RC) empfangenen Frame, das elektronische Organ (O1) zu zwingen, wenigstens jede Bitgruppe des empfangenen Frames unverändert zu verwenden, die bezeichnend ist für einen Parameter einer lokalen Funktion vom Typ nicht sicherheitsgerichtet, die vom elektronischen Organ (O1) verwendet wird.

9. Verfahren nach Anspruch 8, **dadurch gekennzeichnet, dass** es ferner darin besteht, bei Feststellung eines Fehlers in wenigstens einer Bitgruppe in einem vom Netzwerk (RC) empfangenen Frame, die bezeichnend ist für einen Parameter einer lokalen Funktion vom Typ sicherheitsgerichtet, das elektronische Organ (O1) zu zwingen, ein Ersatzframe mit Bitgruppen, die ausgewählte Werte aufweisen, zu verwenden, anstelle der fehlerhaften, sicherheitsgerichteten Bitgruppe.

## Claims

1. Device for controlling frames of groups of bits received (D) for an electronic member (O1) intended to be connected to a communication network (RC) and using at least one local function of the so-called non-security type, **characterised in that** it comprises control means (MC) arranged, when there is present, in a frame received from said network (RC), an error in at least one group of bits, to force said electronic member (O1) to use as it stands at least each group of bits in said frame received that represents a parameter of a local function of the non-security type used by said electronic member (O1).

2. Device according to claim 1, **characterised in that** it comprises analysis means (MA) arranged to determine the type of each local function using an erroneous group of bits detected, so as to indicate this given type to said control means (MC).

3. Device according to claim 1, **characterised in that** said control means (MC) are arranged to determine the type of each local function using an erroneous group of bits detected.

4. Device according to claim 1, **characterised in that** said control means (MC) are arranged, in the event of detection by said electronic member (O1) of a received frame containing at least one group of bits representing a parameter of a non-security local function and then a decision to replace this erroneous frame detected with a replacement frame comprising groups of replacement bits having chosen values, to force said electronic member (O1) to use as it stands at least each group of bits in said erroneous frame detected, representing a parameter of at least one non-security function, in place of the corresponding group of replacement bits contained in said replacement frame.

5. Device according to one of claims 1 to 4, **characterised in that** said control means (MC) are further arranged, when there is present, in a frame received from said network (RC), an error in least one group of bits representing a parameter of a local function of the so-called security type, to force said electronic member (O1) to use a group of replacement bits having a chosen value in place of said erroneous group of security bits.

6. Device according to claim 5, **characterised in that** said chosen value is a predefined default value.

7. Electronic member (O1), intended to be connected to a communication network (RC), **characterised in that** it comprises a frame control device (D) according to one of the preceding claims.

8. Method for controlling frames of groups of bits received (D) for an electronic member (O1) intended to be connected to a communication network (RC) and using at least one local function of the so-called non-security type, **characterised in that** it consists, when, in a frame received from said network (RC), an error is detected in at least one group of bits, to force said electronic member (O1) to use as it stands at least each group of bits in said frame received that represents a parameter of a local function of the non-security type used by said electronic member (O1).

9. Method according to claim 8, **characterised in that** it further consists, in the event of detection, in a frame received from said network (RC), of an error in at least one group of bits representing a parameter of a local function of the so-called security type, of forcing said electronic member (O1) to use a replacement frame comprising groups of bits having values chosen in place of said erroneous group of security bits.
